# EUROPÄISCHE PATENTSCHRIFT

(11) **EP 3 315 362 B1**
(45) Veröffentlichungstag und Bekanntmachung des Hinweises auf die Patenterteilung: **01.04.2020**
(21) Anmeldenummer: 17196879.5
(22) Anmeldetag: 17.10.2017
(51) Int. Cl.: B60R 15/02

(54) **DUSCHVORRICHTUNG UND DAMIT AUSGESTATTETES NUTZFAHRZEUG**
SHOWER DEVICE AND COMMERCIAL VEHICLE EQUIPPED WITH SAME
DISPOSITIF DE DOUCHE ET VÉHICULE UTILITAIRE ÉQUIPÉ D'UN TEL DISPOSITIF

(30) Priorität: 28.10.2016 DE 102016012870; 31.03.2017 DE 102017003080
(43) Veröffentlichungstag der Anmeldung: 02.05.2018
(73) Patentinhaber: MAN Truck & Bus SE, 80995 München (DE)
(72) Erfinder: Langer, Christoph, 90547 Stein (DE); Langer, Alexander, 90451 Nürnberg (DE)
(74) Vertreter: v. Bezold & Partner Patentanwälte - PartG mbB

(56) Entgegenhaltungen:
- DE-C1- 19 815 880
- DE-U- 7 826 778
- DE-U1- 8 311 886

## Beschreibung

Die vorliegende Erfindung betrifft eine Duschvorrichtung für ein Nutzfahrzeug und ein mit einer solchen Vorrichtung ausgestattetes Nutzfahrzeug.

Ein großes Problem von Fernfahrern ist die oft fehlende Möglichkeit, sich am Ende eines Arbeitstages zu duschen, da Fahrer und Fahrzeug beispielsweise nicht auf einem Rastplatz sondern auf einem nicht mit stationären Duschen ausgestatteten Parkplatz einer Autobahn oder innerhalb eines Industriegebiets ohne Duschmöglichkeit parken müssen. Zum Teil behelfen sich Fahrer durch die Mitnahme von Kanistern mit Wasser, um dieses im Freien über sich zu schütten.

Das Dokument DE 198 15 880 C1 beschreibt eine aufblasbare doppelwandige Duschzelle, die in Staulage seitlich unter der Ladefläche eines LKWs einschiebbar angeordnet ist. In Gebrauchslage ist die Duschzelle seitlich oder hinter dem LKW mit dem LKW verkoppelt. Das Dokument DE 78 26 778 U1 beschreibt eine zusammenlegbare Duscheinrichtung für Wohnmobile und Wohnanhänger, deren Duschwanne im zusammengelegten Zustand mit Schnellverschlüssen an der Decke des Fahrzeugs befestigt wird und deren Abfluss durch eine Bohrung im Fahrzeugboden erfolgt.

Aus dem Dokument DE 10 2006 044 412 A1 ist eine Nutzfahrzeugkabine mit Innenraumtüren bekannt, die eine Vielzahl von Funktionsraumbereichen innerhalb der Nutzfahrzeugkabine gegeneinander abtrennen.

Jedoch erlaubt die knappe Grundfläche einer Nutzfahrzeugkabine im Fernverkehr oftmals nicht eine Belegung mit einer solchen Vielzahl von Funktionsraumbereichen.

Somit besteht die Aufgabe, eine Duschmöglichkeit im Fernverkehr unabhängig von stationären Einrichtungen am Parkplatz bereitzustellen. Eine alternative oder weitere Aufgabe ist, die Grundfläche einer Fahrerkabine platzsparend und wahlweise mit einer solchen Duschmöglichkeit auszustatten. Eine alternative oder weitere Aufgabe ist die Vermeidung von Restnässe in der Fahrerkabine.

Diese Aufgabe oder Aufgaben werden durch eine Duschvorrichtung und ein Nutzfahrzeug mit den Merkmalen der unabhängigen Ansprüche 1 und 14 gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem ersten Aspekt ist eine Duschvorrichtung bereitgestellt, die in einer Fahrerkabine eines Nutzfahrzeugs eingebaut oder einbaubar ist. Die Vorrichtung umfasst eine Wanne, die an einem Boden der Fahrerkabine eingebaut oder einbaubar ist. Die Vorrichtung umfasst ferner einen wasserundurchlässigen Balg, der in vertikaler Richtung streckbar ist, und dessen untere Öffnung gegenüber einem Rand der Wanne zur Leitung von innerhalb des Balgs herablaufendem Wasser in die Wanne angeordnet oder anordenbar ist.

Durch die Einbaubarkeit und/oder die Ausbaubarkeit der Duschvorrichtung oder eines Teils der Vorrichtung (beispielsweise des Balgs und/oder der Wanne) kann ein knapper Raum der Fahrerkabine wahlweise an eine Nutzung (beispielsweise je Nutzfahrzeug einer Fahrzeugflotte oder je Fahrt des Nutzfahrzeugs) angepasst werden.

Die Vorrichtung kann als Sonderausstattung des Nutzfahrzeugs eingebaut sein oder als Nachrüstmöglichkeit in ein bestehendes Nutzfahrzeug eingebaut oder einbaubar sein.

Zudem kann die Vorrichtung im eingebauten Zustand aufgrund einer ungestreckten (beispielsweise vollständig kontrahierten) Stellung des Balgs kein oder ein geringes Volumen der Fahrerkabine beanspruchen. Beispielsweise kann die Vorrichtung in der ungestreckten Stellung des Balgs (zumindest im Wesentlichen) auf das Volumen der Wanne verkleinert sein. Ein flexibler Schlauch und/oder ein mit dem Schlauch verbundener Duschkopf kann innerhalb der Wanne verstaubar sein.

Alternativ oder ergänzend kann durch den Ausbau der Vorrichtung oder eines Teils der Vorrichtung (beispielsweise des Balgs und/oder der Wanne) diese nach einer Nutzung getrocknet werden und/oder Restfeuchtigkeit aus der Fahrerkabine entfernt werden.

Die einbaubare und/oder ausbaubare Duschvorrichtung kann in bestehenden Nutzfahrzeugen nachgerüstet werden. Dazu kann die Wanne in eine (beispielsweise für Stauraum vorgesehene) Ausnehmung am Kabinenboden eingesetzt werden.

Die Vorrichtung ermöglicht den Berufsstand der Fernfahrer und Fernfahrerinnen aufzuwerten und den Arbeitsalltag des Fernfahrers bzw. der Fernfahrerinnen zu verbessern. Spediteure könnten Kosten einsparen, beispielsweise indem Kosten für externe Duschmöglichkeiten an Rastplätzen entfallen und/oder kürzere Fahrtrouten ohne die Nebenbedingung einer stationären Duschmöglichkeit befahren werden können. Die Vorrichtung ermöglicht eine flexible, kostengünstige und signifikante Erhöhung des Ausstattungsstandards von Nutzfahrzeugen.

Die Duschvorrichtung kann bei abgestelltem Nutzfahrzeug genutzt werden. Alternativ oder ergänzend ist eine Nutzung der Duschvorrichtung während der Fahrt möglich, beispielsweise durch einen Ersatzfahrer, während einer autonomen Fahrt oder während einer vernetzten Fahrt als nachfahrendes Fahrzeug in einem Fahrzeugverband (der auch als Platoon bezeichnet werden kann).

Der Balg kann zwischen einer in der vertikalen Richtung gestreckten Stellung und eine ungestreckte Stellung beweglich sein. Der Balg kann ein Faltenbalg sein. Die ungestreckte Stellung kann eine mehrfach gefaltete Stellung des Balgs sein.

Der Balg kann kunststoffbeschichtet oder mit einer Folie aus Kunststoff bespannt sein. Der Balg kann an seinen Enden in jeweils einen Rahmen gefasst sein.

Das Innere des gestreckten Balgs kann zur Aufnahme einer stehenden Person bemessen sein. Der Balg kann einen rechteckigen Querschnitt aufweisen. Der Querschnitt des Balgs kann (beispielsweise hinsichtlich Form und Größe) dem Rand der Wanne entsprechen. Der Querschnitt des Balgs kann über die gesamte Länge des Balgs einheitlich sein.

Das herablaufende Wasser kann durch Abtropfen von einer benetzten Innenfläche des Balgs in die Wanne geleitet werden. Die untere Öffnung des Balgs kann vollständig am oder innerhalb des Rands der Wanne angeordnet oder anordenbar sein.

Der Balg kann lichtdurchlässig sein. Alternativ oder ergänzend kann der Balg intransparent sein, beispielsweise blickdicht, lichtstreuend oder matt.

Die untere Öffnung des Balgs kann am Rand der Wanne befestigt sein. Ein der unteren Öffnung gegenüberliegendes oberes Ende des Balgs kann beim Übergang von einer ungestreckten Stellung in eine gestreckten Stellung des Balgs entlang der vertikalen Richtung (nach oben) beweglich sein. In einem eingebauten Zustand der Vorrichtung kann, bei einer ersten Variante, die untere Öffnung des Balgs dauerhaft am Rand der Wanne montiert sein.

Das obere Ende des Balgs kann in der gestreckten Stellung des Balgs lösbar an einer Decke der Fahrerkabine befestigt oder befestigbar sein. An der Kabinendecke und/oder am oberen Ende des Balgs (beispielsweise an einem oberen Rahmen des Balgs) können Befestigungsstellen oder Befestigungselemente zur lösbaren Befestigung angeordnet sein.

Alternativ oder ergänzend kann ein der unteren Öffnung gegenüberliegendes oberes Ende des Balgs an einer Decke der Fahrerkabine befestigt sein. Die untere Öffnung des Balgs kann beim Übergang von einer ungestreckten Stellung in eine gestreckte Stellung des Balgs entlang der vertikalen Richtung (nach unten) beweglich sein. In einem eingebauten Zustand der Vorrichtung kann, bei einer zweiten Variante, die obere Öffnung des Balgs dauerhaft an der Decke der Fahrerkabine montiert sein.

Die untere Öffnung des Balgs kann in der gestreckten Stellung des Balgs lösbar am Rand der Wanne befestigbar sein. Am Rand der Wanne und/oder an der unteren Öffnung des Balgs (beispielsweise einem unteren Rahmen des Balgs) können Befestigungsstellen oder Befestigungselemente zur lösbaren Befestigung angeordnet sein.

In jeder Variante können der obere Rahmen und der untere Rahmen des Balgs eine übereinstimmende Form und/oder Größe aufweisen. Die Form und/oder die Größe des oberen Rahmens und/oder des unteren Rahmens können einem Querschnitt des Balgs entsprechen und/oder den Querschnitt des Balgs bestimmen.

Der Balg kann einen sich in die vertikale Richtung erstreckenden Reißverschluss umfassen. Eine Länge des Reißverschlusses kann zum Betreten und Verlassen des Inneren des Balgs bemessen sein. Der Querschnitt des Balgs kann eine Ecke umfassen, die einer Längskante des Balgs entspricht. Der Reißverschluss kann ein Öffnen und Schließen des gestreckten Balgs entlang der Längskante ermöglichen.

Die Wanne kann einen Wasserablauf umfassen. Der Wasserablauf kann über eine Außenklappe von außerhalb des Nutzfahrzeugs zugänglich sein.

Die Vorrichtung kann ferner einen Tank, eine Zuleitung und/oder eine Pumpe umfassen. Der Tank kann zur Aufnahme von Frischwasser ausgebildet sein. Der Tank kann über die Zuleitung mit der Pumpe mit Frischwasser befüllbar sein. Der Tank kann ausgangsseitig mit dem Duschkopf in Fluidverbindung stehen. Die Pumpe kann elektrisch betrieben sein. Die Pumpe kann an einer Außenseite der Wanne oder innerhalb der Wanne befestigt sein. Im letzteren Fall kann (beispielsweise neben einer Öffnung in der Wanne für den Wasserablauf) in der Wanne eine Öffnung für einen Wasseranschluss zur Pumpe vorgesehen sein.

Ein Frischwasseranschluss, der beispielsweise mit einer Eingangsseite der Pumpe in Fluidverbindung steht, kann über eine Außenklappe von außerhalb des Nutzfahrzeugs zugänglich sein.

Das Frischwasser kann im Tank und/oder beim Durchströmen der Zuleitung oder der Pumpe beheizbar sein. Eine Heizfunktion (beispielsweise eine Wärmequelle oder ein Wärmetauscher) kann im Tank, an/in der Zuleitung oder an der Pumpe angeordnet sein.

Das Frischwasser kann durch Abwärme (während des Betriebs) oder Restwärme (nach dem Betrieb) eines Antriebs oder einer Antriebskomponente des Nutzfahrzeugs (beispielsweise einer Brennkraftmaschine oder eines elektrischen Traktionsenergiespeichers) beheizbar sein. Alternativ oder ergänzend kann das Frischwasser während der Fahrt für eine spätere Nutzung in einer Parkposition beheizbar sein. Die Beheizung des Frischwassers kann ortsabhängig gesteuert sein. Beispielsweise kann die Beheizung des Frischwassers während einer Fahrstrecke bis zum Erreichen der Parkposition aufgrund der in einem Navigationssystem des Nutzfahrzeugs gespeicherten Parkposition gesteuert sein. Optional kann das Navigationssystem Informationen über die Verfügbarkeit oder das Fehlen einer externen Duschmöglichkeit an der Parkposition abrufen, anzeigen und/oder der Heizsteuerung zugrunde legen.

Zumindest die Wanne kann in einer Ausnehmung am Boden der Fahrerkabine eingebaut oder einbaubar sein. Die Ausnehmung kann eine Vertiefung im Kabinenboden oder ein Stauraum am Kabinenboden sein. In der Ausnehmung kann die Wanne, die Pumpe, der Frischwasseranschluss und/oder der Wasserablauf eingebaut oder einbaubar sein.

Die Ausnehmung kann über eine Außenklappe von außerhalb des Nutzfahrzeugs (beispielsweise seitlich am Fahrzeug) zugänglich sein. In der Ausnehmung kann zwischen der Wanne und der Außenklappe ein Lüfter angeordnet sein. Der Lüfter kann feuchte Luft und/oder Restfeuchte aus der Vorrichtung ins Freie fördern. Der Lüfter kann mit einer Steuerung verbunden sein, die eine Luftfeuchtigkeit innerhalb des Balgs, der Ausnehmung oder der Fahrerkabine erfasst und bei Überschreiten eines Grenzwerts den Lüfter betreibt.

Der Wasserablauf, der Frischwasseranschluss und/oder der Lüfter können über dieselbe Außenklappe zugänglich sein.

Die Vorrichtung kann mit dem Balg in seiner ungestreckten Stellung innerhalb der Ausnehmung am Boden der Fahrerkabine verstaubar ist. Die Vorrichtung kann zumindest teilweise innerhalb der Ausnehmung am Boden der Fahrerkabine verstaubar sein. Beispielsweise können die Wanne, der Balg in der ungestreckten Stellung und/oder der Duschkopf innerhalb der Ausnehmung verstaubar sein.

Die Ausnehmung kann am Boden der Fahrerkabine durch eine Abdeckung verschließbar sein. Die Abdeckung kann eine Ausbreitung von verdunstender Restfeuchtigkeit aus der Wanne und/oder dem Balg in die Fahrerkabine verhindern.

Die Vorrichtung kann hinter einem Sitz (z. B. einem Fahrersitz) und/oder bezüglich der Fahrtrichtung hinter einer B-Säule der Fahrerkabine eingebaut oder einbaubar sein. Die Vorrichtung kann auf der Fahrerseite in der Fahrerkabine eingebaut oder einbaubar sein. Beispielsweise kann die Wanne zur Aufnahme in einer Ausnehmung angepasst sein, die hinter dem Fahrersitz und/oder in einem Teil der Fahrerkabine hinter der B-Säule vorhanden ist.

Gemäß einem weiteren Aspekt ist ein Nutzfahrzeug, insbesondere eine Sattelzugmaschine, mit einer Duschvorrichtung gemäß dem vorstehenden Aspekt bereitgestellt. Beispielsweise kann das Nutzfahrzeug eine Fahrerkabine umfassen, in welcher die Duschvorrichtung eingebaut sein kann.

Weitere Vorteile und Merkmale der Erfindung werden im Folgenden unter Bezugnahme auf die beigefügten Zeichnungen beschrieben. Es zeigen:
- Figur 1: eine schematische räumliche Darstellung eines ersten Ausführungsbeispiels einer Duschvorrichtung;
- Figur 2: eine schematische räumliche Darstellung eines zweiten Ausführungsbeispiels der Duschvorrichtung;
- Figuren 3 und 4: einen beispielhaften Einbauort der Duschvorrichtung in einer Fahrerkabine eines Nutzfahrzeugs in einer Seitenansicht bzw. einer Aufsicht;
- Figur 5: eine schematische räumliche Darstellung des zweiten Ausführungsbeispiels der Vorrichtung im eingebauten Zustand bezüglich eines Bodens der Fahrerkabine;
- Figur 6: eine schematische räumliche Darstellung des zweiten Ausführungsbeispiels im eingebauten Zustand bezüglich der Fahrerkabine; und
- Figuren 7 und 8: eine schematische räumliche Darstellung bzw. eine Aufsicht eines dritten Ausführungsbeispiels der Duschvorrichtung.

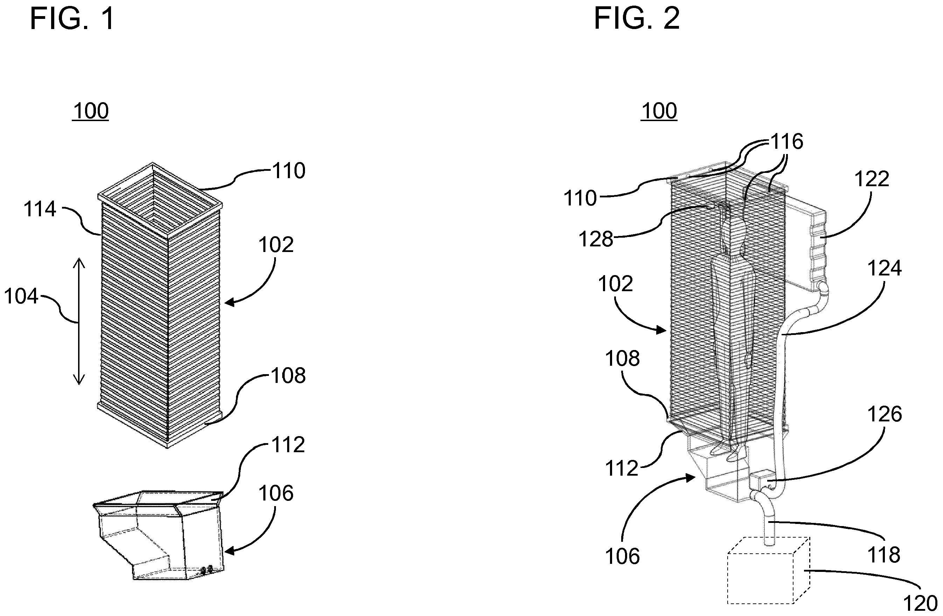

Figur 1 zeigt in einer schematischen und räumlichen Darstellung eine allgemein mit Bezugszeichen 100 bezeichnete Duschvorrichtung. Die Vorrichtung 100 umfasst einen Balg 102, der in seiner Längsrichtung 104 streckbar ist. Die Vorrichtung 100 umfasst ferner eine Wanne 106.

Der Balg 102 weist eine untere Öffnung 108 auf, die beispielsweise in einen rechteckigen Rahmen gefasst ist. An einem in Längsrichtung 104 der unteren Öffnung 108 gegenüberliegenden oberen Ende 110 ist der Balg 102 an einer Decke einer Fahrerkabine eines Nutzfahrzeugs befestigbar, so dass in der gestreckten Stellung die Längsrichtung 104 (zumindest im Wesentlichen) die Vertikale ist.

Die untere Öffnung 108 des Balgs 102 ist an oder innerhalb eines oberen Rands 112 der Wanne 106 anordenbar. Innerhalb des Balgs 102 (in Längsrichtung 104 nach unten) abfließendes Wasser wird so in die Wanne 106 geleitet.

Beispielsweise sind am Rand 112 der Wanne 106 zur Positionierung des Rahmens der unteren Öffnung 108 des Balgs 102 sich nach außen weitende Anlageflächen angeordnet. Vorzugsweise entspricht ein innerer Umfang des Rands 112 der Wanne 106 einem inneren oder äußeren Umfang der unteren Öffnung 108 des Balgs 102.

Die Wanne 106 ist zur Aufnahme in einer Ausnehmung eines Bodens der Fahrerkabine des Nutzfahrzeugs ausgebildet. Die Wanne 106 umfasst einen Ablauf für das darin aufgenommene Wasser.

In einer ersten Variante ist der Balg 102 im eingebauten Zustand der Duschvorrichtung 100 mit seinem oberen Ende 110 an der Kabinendecke befestigt. In einer ersten Stellung (z. B. vor oder nach dem Gebrauch) ist der zusammengefaltete Balg 102 an der Kabinendecke verstaut. In einer zweiten Stellung ist der gestreckte Balg 102 mit seiner unteren Öffnung 108 am Rand 112 der Wanne 106 in Anlage gebracht zum Gebrauch der Duschvorrichtung 100. Dazu kann der Rahmen der unteren Öffnung 108 des Balgs 102 durch einen lösbaren Formschluss am Rand 112 der Wanne 106 befestigt werden (beispielsweise mittels einer Einhängefunktion oder einer Einrastfunktion). Der lösbare Formschluss kann durch an der Öffnung 108 und am Rand 112 jeweils umlaufend angeordnete und paarweise ineinandergreifende Ösen und Haken oder Rastelemente realisiert sein.

In einer zweiten Variante ist die untere Öffnung 108 des Balgs 102 im eingebauten Zustand der Vorrichtung 100 am Rand 112 der Wanne 106 befestigt. In der ersten Stellung (vor oder nach dem Gebrauch) ist der gefaltete Balg 102 an oder in der Wanne 106 verstaut. Zum Gebrauch der Vorrichtung 100 wird das obere Ende 110 des Balgs 102 vertikal nach oben bewegt und an der Kabinendecke lösbar befestigt, beispielsweise mit einem wie vorstehend beschriebenen lösbaren Formschluss (z. B. der Einhängefunktion oder der Einrastfunktion).

Beispielsweise ist in der ersten Variante der Balg 102 fest mit der Decke der Fahrerkabine verbunden und lösbar an der Wanne 106 befestigbar. In der zweiten Variante kann der Balg 102 fest mit der Wanne 106 verbunden sein und lösbar an der Decke der Fahrerkabine befestigbar sein.

In jeder Variante kann das obere Ende 110 des Balgs 102 übereinstimmend mit der unteren Öffnung 108 ausgebildet sein. Beispielsweise können gleiche Rahmen den Balg 102 an seinen beiden Enden 108 und 110 abschließen. Dadurch kann der Einbau des Balgs erleichtert werden. Alternativ kann das obere Ende 110 des Balgs (beispielsweise in der zweiten Variante) wasserdicht geschlossen sein.

In jeder Variante kann der Balg aus wasserundurchlässigem und faltbarem Kunststoff gefertigt sein. Alternativ oder ergänzend ist der Balg 102 lichtdurchlässig (beispielweise matt).

Optional verläuft im Balg 102 entlang dessen Längsrichtung 104 ein Reißverschluss 114, beispielsweise entlang einer Kante des rechteckigen Querschnitts des Balgs 102. Dadurch kann das Innere des Balgs 102 auch in der gestreckten Stellung betreten oder verlassen werden. Dazu ist ein Schieber des Reißverschlusses 114 mit einem Griffelement innerhalb des Balgs 102 und einem Griffelement außerhalb des Balgs 102 verbunden.

Figur 2 zeigt eine schematische perspektivische Darstellung eines zweiten Ausführungsbeispiels der Duschvorrichtung 100. Das zweite Ausführungsbeispiel kann eine Weiterbildung des ersten Ausführungsbeispiels sein, wobei entsprechende Merkmale mit übereinstimmenden Bezugszeichen versehen sind.

Der Fahrer steigt in die Wanne 106 im Inneren der Kabine des Nutzfahrzeugs, beispielsweise hinter dem Fahrersitz, und zieht den Balg 102 beispielsweise gemäß der zweiten Variante nach oben. Der Fahrer befestigt den Balg 102 an mehreren Stellen an der Kabinendecke des Nutzfahrzeugs. Optional sind im Rahmen am oberen Ende 110 des Balgs 102 Befestigungsstellen 116 zur Befestigung an der Decke der Fahrerkabine vorgesehen.

Auf Bodenhöhe der Wanne 106 ist seitlich an einer ersten Öffnung in der Wanne 106 ein Wasserablauf 118, beispielsweise ein flexibler Schlauch, angeschlossen. Durch den Wasserablauf 118 kann das Abwasser aus der Wanne 106, beispielsweise ins Freie, abgegeben werden. Alternativ oder ergänzend kann ein Auffanggefäß 120 an den Ablauf 118 angeschlossen sein.

Ein Wasservorratstank 122 für Frischwasser ist im oberen Bereich der Fahrerkabine angeordnet. Optional ist im Tank 122 eine Heizfunktion (beispielsweise ein Wärmetauscher oder eine direkte Wärmequelle) integriert. Die dem Wasser im Tank 122 zugeführte Wärme kann über Wärmekollektoren, als Abwärme einer Brennkraftmaschine des Nutzfahrzeugs oder durch eine elektrische Heizung bereitgestellt sein.

Ein für das Duschen günstiger Wasserdruck kann durch die Höhe des Tanks 122 erreicht werden. Beispielsweise kann der Tank 122 an der Decke der Fahrerkabine angeordnet sein. Alternativ oder ergänzend kann ein für das Duschen günstiger Wasserdruck innerhalb des Tanks 122 aufgebaut werden, indem eine über eine Zuleitung 124 mit dem Tank 122 in Fluidverbindung stehende Pumpe 126 während des Duschens betrieben wird. Die Pumpe 126 kann elektrisch (beispielsweise über das 24-Volt-Netz des Nutzfahrzeugs) mit elektrischer Leistung versorgt werden.

In einer ersten Variante ist die elektrische Pumpe 126 über einen Schalter (beispielsweise in der Wanne 106 oder direkt an einem Duschkopf 128) ein- und ausschaltbar. In einer zweiten Variante ist die elektrische Pumpe 126 zur Regelung des Wasserdrucks im Tank 122 mit einer Regelung verbunden, die über einen Drucksensor den im Wassertank 122 herrschenden Druck erfasst.

Der Duschkopf 128 ist innerhalb des Balgs 102 über einen flexiblen Schlauch mit einem Auslass am Tank 122 verbunden.

Alternativ oder ergänzend zur in dem Tank 122 integrierten Heizfunktion kann an der Pumpe 126 oder in der Zuleitung 124 ein Durchlauferhitzer angeordnet sein.

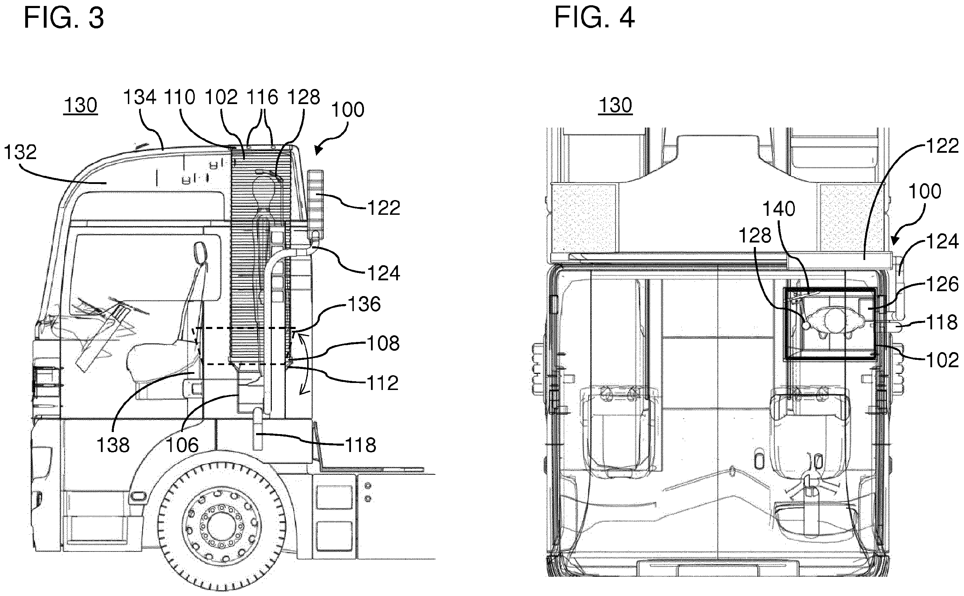

Figur 3 zeigt schematisch in einer seitlichen Rissansicht eines Nutzfahrzeugs 130 (beispielsweise einer Sattelzugmaschine) einen Einbauort der Vorrichtung 100. Die Vorrichtung 100 ist in einem hinteren Teil der Fahrerkabine 132 angeordnet. Das obere Ende 110 des Balgs 102 ist (zumindest in der gestreckten Stellung des Balgs 102) an der Decke 134 der Fahrerkabine 132 befestigt.

Der Wasserablauf 118 und/oder die Pumpe 126 sind von außerhalb des Nutzfahrzeugs 130 über eine schwenkbewegliche Klappe 136 zugänglich. Beispielsweise wird während des Duschens das Abwasser über den aus der geöffneten Außenklappe 136 herausragenden Ablauf 118 ins Freie abgegeben.

Zur Trocknung der Duschvorrichtung 100 (insbesondere des Inneren des Balgs 102 und der Wanne 106) ist optional hinter der Außenklappe 136 ein Lüfter angeordnet. Der Lüfter saugt Luft aus der Ausnehmung an, in der die Wanne 106 angeordnet ist, und gibt diese über die geöffnete Außenklappe 136 ins Freie ab.

Außenflächen der Wanne 106 sind zur flächigen Anlage in einer am Boden im hinteren Teil der Fahrerkabine 132 (beispielsweise für Stauraum) bestehenden Ausnehmung 144 ausgebildet. Die Außenklappe 136 kann einen seitlichen Zugang zur Ausnehmung öffnen und verschließen. Die Ausnehmung kann eine Verladebox sein. Beispielsweise ist die Vorrichtung 100 in einer Ausnehmung hinter dem Fahrersitz und/oder in Fahrtrichtung hinter einer B-Säule 138 der Fahrerkabine 132 einbaubar.

Figur 4 zeigt schematisch eine Rissaufsicht des Nutzfahrzeugs 130. Die Vorrichtung 100 ist, beispielsweise einschließlich des Frischwassertanks 122, auf der Fahrerseite angeordnet. Optional sind innerhalb des Balgs 102 eine oder mehrere Querstreben 140 angeordnet. Die Querstreben 140 sind jeweils horizontal, d. h. auf einer einheitlichen Höhe mit der faltbaren Wand des Balgs 102 verbunden, so dass der oder die Querstreben 140 bei der Streckung des Balgs 102 eine Position in günstiger Greifhöhe und/oder Überkopfhöhe einnehmen. An mindestens einer der horizontalen Querstreben 140 ist der Duschkopf 128 befestigbar.

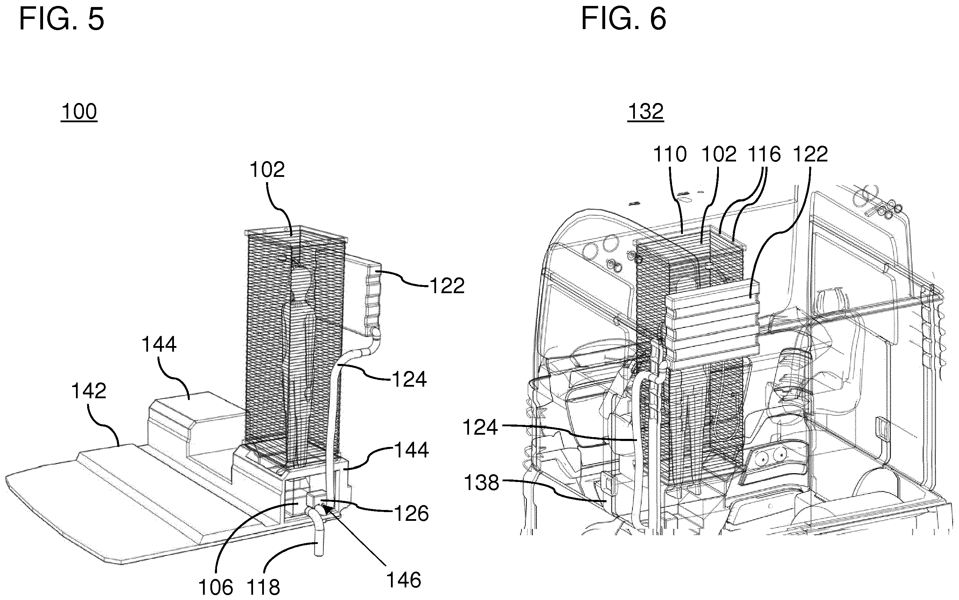

Figur 5 zeigt eine schematische räumliche Darstellung einer Weiterbildung des zweiten Ausführungsbeispiels der Vorrichtung 100, die am Boden 142 der Fahrerkabine eingebaut ist. Der Boden 142 umfasst im hinteren Teil der Fahrerkabine jeweils auf der Fahrerseite und auf der Beifahrerseite eine Ausnehmung 144, die jeweils über eine Außenklappe (beispielsweise die Außenklappe 136) von außerhalb des Nutzfahrzeugs 130 zugänglich sind. Die Wanne 106 und die Pumpe 126 sind in der Ausnehmung 144 auf der Fahrerseite angeordnet. Bei geöffneter Außenklappe 136 ist ein Frischwasseranschluss 146 an der Pumpe 126 zugänglich. Am Frischwasseranschluss 146 kann eine Fahrzeug-externe Frischwasserleitung angeschlossen werden.

Der Balg 102 und/oder die Wanne 106 kann für eine bestehende Ausnehmung (die auch als Box oder Verladebox bezeichnet werden kann) hinter dem Fahrersitz angepasst sein. In diese Ausnehmung wird die Wanne 106 mit Wasseranschluss 146 und Wasserablauf 118 eingebaut, z. B. formschlüssig gegen seitliches Verrutschen und/oder horizontales Drehen eingesetzt. Beispielsweise kann die Wanne 106 ohne Rückhalt in der vertikalen Richtung 104 in die Ausnehmung 144 eingelegt und aus dieser entnommen werden. Optional kann die Wanne, beispielsweise durch eine Drehverriegelung am Rand 112, in der Ausnehmung 144 befestigbar sein.

Nach dem Duschen kann der Fahrer die Wanne 106 (beispielsweise zusammen mit dem Kunststoffbalg 102) aus der Fahrerkabine 132 entnehmen. Alternativ können zumindest die Wanne 106 und der Balg 102 in der Ausnehmung 144 hinter dem Fahrersitz verstaut werden. Eine Abdeckung (beispielsweise ein Deckel oder eine Schwenkklappe) der Ausnehmung kann geschlossen werden, so dass es zu keiner Feuchtigkeitsansammlung in der Fahrerkabine 132 außerhalb der Ausnehmung 144 kommt.

Figur 6 zeigt eine schematische räumliche Darstellung der Fahrerkabine 132, in der das zweite Ausführungsbeispiel eingebaut ist. Der Tank 122 kann außerhalb der Fahrerkabine 132, beispielsweise an einer Rückwand der Fahrerkabine 132, befestigt sein.

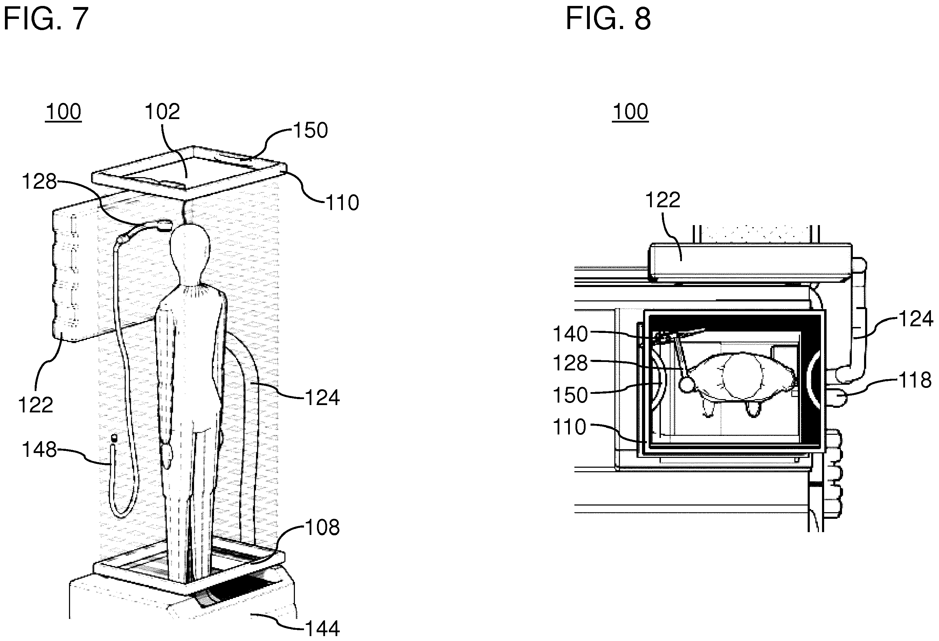

Die Figuren 7 und 8 zeigen eine schematische räumliche Darstellung bzw. eine schematische Aufsicht eines dritten Ausführungsbeispiels der Vorrichtung 100. Das dritte Ausführungsbeispiel kann eine Weiterbildung des ersten oder zweiten Ausführungsbeispiels sein, wobei übereinstimmende Bezugszeichen gleiche oder austauschbare Merkmale betreffen.

Am oberen Ende 110 des Balgs 102 sind nach innen ragende Griffe 150 angeordnet. Beispielsweise erstrecken sich zwei gegenüberliegende Griffe 150 quer zur Längsrichtung 104 des Balgs 102 ausgehend vom oberen Rahmen des Balgs. Indem in jeder Hand einer der Griffe 150 gefasst wird, kann eine in der Wanne 106 stehende Person das obere Ende 110 des Balgs 102 zur Decke 134 heben, wo das obere Ende 110 beispielsweise in der gestreckten Stellung des Balgs 102 lösbar befestigt wird. Nach dem Duschen kann mittels der Griffe 150 eine in der Wanne 106 stehende Person das obere Ende 110 des Balgs 102 absenken in die zusammengefaltete, ungestreckte Stellung des Balgs 102.

In jedem Ausführungsbeispiel kann der Duschkopf 128 an der Kabinendecke 134 befestigt sein oder über einen flexiblen Schlauch 148 mit dem Tank 122 in Fluidverbindung stehen. Im ungenutzten Zustand können der Schlauch 148 und der Duschkopf 128 in der Wanne 106 verstaut sein.

Obwohl die Erfindung unter Bezugnahme auf bestimmte Ausführungsbeispiele beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Situation oder ein bestimmtes Material an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 100: Duschvorrichtung
- 102: Balg
- 104: Streckbare Längsrichtung des Balgs
- 106: Wanne
- 108: Untere Öffnung des Balgs
- 110: Oberes Ende des Balgs
- 112: Rand der Wanne
- 114: Reißverschluss
- 116: Befestigungsstellen
- 118: Wasserablauf
- 120: Auffanggefäß
- 122: Frischwassertank
- 124: Zuleitung
- 126: Pumpe
- 128: Duschkopf
- 130: Nutzfahrzeug
- 132: Fahrerkabine
- 134: Decke der Fahrerkabine
- 136: Außenklappe
- 138: B-Säule der Fahrerkabine
- 140: Horizontale Querstrebe
- 142: Boden der Fahrerkabine
- 144: Ausnehmung am Kabinenboden
- 146: Frischwasseranschluss
- 148: Flexibler Schlauch
- 150: Griff am oberen Ende

## Patentansprüche

1. Duschvorrichtung (100), die in einer Fahrerkabine (132) eines Nutzfahrzeugs (130) eingebaut oder einbaubar ist, wobei die Vorrichtung umfasst:
einen Boden in der Fahrerkabine (132)
eine Wanne (106), die am Boden (142) der Fahrerkabine eingebaut oder einbaubar ist; und
einen wasserundurchlässigen Balg (102), der in vertikaler Richtung (104) streckbar ist, und dessen untere Öffnung (108) gegenüber einem Rand (112) der Wanne (106) zur Leitung von innerhalb des Balgs herablaufendem Wasser in die Wanne angeordnet oder anordenbar ist, wobei zumindest die Wanne (106) in einer Ausnehmung (144) am Boden (142) der Fahrerkabine (132) eingebaut oder einbaubar ist.

2. Vorrichtung nach Anspruch 1, wobei der Balg blickdicht und/oder lichtdurchlässig ist.

3. Vorrichtung nach Anspruch 1 oder 2, wobei die untere Öffnung (108) des Balgs (102) am Rand (112) der Wanne (106) befestigt ist, und wobei ein der unteren Öffnung (108) gegenüberliegendes oberes Ende (110) des Balgs (102) beim Übergang von einer ungestreckten Stellung in eine gestreckten Stellung des Balgs entlang der vertikalen Richtung (104) beweglich ist.

4. Vorrichtung nach Anspruch 3, wobei das obere Ende (110) des Balgs (102) in der gestreckten Stellung des Balgs lösbar an einer Decke (134) der Fahrerkabine (132) befestigt oder befestigbar ist.

5. Vorrichtung nach einem der Ansprüche 1 bis 4, wobei ein der unteren Öffnung (108) gegenüberliegendes oberes Ende (110) des Balgs (102) an einer Decke (134) der Fahrerkabine (132) befestigt ist, und wobei die untere Öffnung (108) des Balgs (102) beim Übergang von einer ungestreckten Stellung in eine gestreckten Stellung des Balgs entlang der vertikalen Richtung (104) beweglich ist.

6. Vorrichtung nach Anspruch 5, wobei die untere Öffnung (108) des Balgs (102) in der gestreckten Stellung des Balgs lösbar am Rand (112) der Wanne (106) befestigbar ist.

7. Vorrichtung nach einem der Ansprüche 1 bis 6, wobei der Balg (102) einen sich in die vertikale Richtung (104) erstreckenden Reißverschluss (114) umfasst.

8. Vorrichtung nach einem der Ansprüche 1 bis 7, wobei die Wanne (106) einen Wasserablauf (118) umfasst, der über eine Außenklappe (136) von außerhalb des Nutzfahrzeugs (130) zugänglich ist.

9. Vorrichtung nach einem der Ansprüche 1 bis 8, ferner einen Tank (122) umfassend, der über eine Zuleitung (124) mit einer elektrisch betriebenen Pumpe (126) mit Frischwasser befüllbar ist.

10. Vorrichtung nach Anspruch 9, wobei ein Frischwasseranschluss (146) eingangsseitig der Pumpe (126) über eine Außenklappe (136) von außerhalb des Nutzfahrzeugs (130) zugänglich ist.

11. Vorrichtung nach Anspruch 9 oder 10, wobei das Frischwasser im Tank (122) und/oder beim Durchströmen der Zuleitung (124) oder der Pumpe (126) beheizbar ist.

12. Vorrichtung nach einem der vorhergehenden Ansprüche, wobei die Vorrichtung (100) mit dem Balg (102) in seiner ungestreckten Stellung innerhalb der Ausnehmung (144) am Boden (142) der Fahrerkabine (132) verstaubar ist.

13. Vorrichtung nach einem der vorhergehenden Ansprüche, wobei die Vorrichtung (100) hinter einem Fahrersitz in der Fahrerkabine (132) eingebaut oder einbaubar ist.

14. Nutzfahrzeug (130) mit einer Fahrerkabine (132), wobei in der Fahrerkabine eine Duschvorrichtung (100) gemäß einem der Ansprüche 1 bis 13 eingebaut ist.

## Claims

1. A shower facility (100) which is, or can be, installed in a driver's cab (132) of a commercial vehicle (130), wherein the facility comprises:
a floor in the driver's cab (132),
a tray (106), which is, or can be, installed on the floor (142) of the driver's cab, and
a water-impermeable bellows arrangement (102), which can be stretched out in the vertical direction (104) and of which the lower opening (108) is, or can be, arranged opposite a periphery (112) of the tray (106) in order for water which drains off within the bellows arrangement to be channelled into the tray, wherein at least the tray (106) is, or can be, installed in a recess (144) in the floor (142) of the driver's cab (132).

2. The facility according to Claim 1, wherein the bellows arrangement is opaque and/or translucent.

3. The facility according to Claim 1 or 2, wherein the lower opening (108) of the bellows arrangement (102) is fastened on the periphery (112) of the tray (106), and wherein an upper end (110) of the bellows arrangement (102), said upper end being located opposite the lower opening (108), can be moved along the vertical direction (104) when the bellows arrangement is being transferred from a non-stretched position into a stretched-out position.

4. The facility according to Claim 3, wherein, in the stretched-out position of the bellows arrangement, the upper end (110) of the bellows arrangement (102) is, or can be, fastened on a ceiling (134) of the driver's cab (132).

5. The facility according to one of Claims 1 to 4, wherein an upper end (110) of the bellows arrangement (102), said upper end being located opposite the lower opening (108), is fastened on a ceiling (134) of the driver's cab (132), and wherein the lower opening (108) of the bellows arrangement (102) can be moved along the vertical direction (104) when the bellows arrangement is being transferred from a non-stretched position into a stretched-out position.

6. The facility according to Claim 5, wherein, in the stretched-out position of the bellows arrangement, the lower opening (108) of the bellows arrangement (102) can be fastened in a releasable manner on the periphery (112) of the tray (106).

7. The facility according to one of Claims 1 to 6, wherein the bellows arrangement (102) comprises a zip (114), which extends in a vertical direction (104).

8. The facility according to one of Claims 1 to 7, wherein the tray (106) comprises a water drain (118), which is accessible from outside the commercial vehicle (130) via an exterior flap (136) .

9. The facility according to one of Claims 1 to 8, also comprising a tank (122), which can be filled with fresh water by an electrically operated pump (126) via a supply line (124).

10. The facility according to Claim 9, wherein a freshwater connection (146) at the entry side of the pump (126) is accessible from outside the commercial vehicle (130) via an exterior flap (136).

11. The facility according to Claim 9 or 10, wherein the fresh water can be heated in the tank (122) and/or as it flows through the supply line (124) or the pump (126).

12. The facility according to one of the preceding claims, wherein the facility (100) can be stowed, with the bellows arrangement (102) in its non-stretched position, within the recess (144) in the floor (142) of the driver's cab (132).

13. The facility according to one of the preceding claims, wherein the facility (100) is, or can be, installed in the driver's cab (132) behind a driver's seat.

14. A commercial vehicle (130) having a driver's cab (132), wherein a shower facility (100) according to one of Claims 1 to 13 is installed in the driver's cab.

## Revendications

1. Dispositif de douche (100) qui est ou peut être installé dans une cabine de conducteur (132) d'un véhicule utilitaire (130), le dispositif comprenant :
un plancher dans la cabine de conducteur (132),
un bac (106) qui est ou peut être installé sur le plancher (142) de la cabine de conducteur ; et
un soufflet imperméable à l'eau (102) qui peut être étiré dans la direction verticale (104) et dont l'ouverture inférieure (108) est ou peut être disposée en face d'un bord (112) du bac (106) pour guider l'eau s'écoulant vers le bas à l'intérieur du soufflet, dans le bac, au moins le bac (106) étant ou pouvant être installé dans un évidement (144) au niveau du plancher (142) de la cabine de conducteur (132).

2. Dispositif selon la revendication 1, dans lequel le soufflet est opaque et/ou translucide.

3. Dispositif selon la revendication 1 ou 2, dans lequel l'ouverture inférieure (108) du soufflet (102) est fixée au niveau du bord (112) du bac (106), et dans lequel une extrémité supérieure (110) du soufflet (102) opposée à l'ouverture inférieure (108) peut être déplacée le long de la direction verticale (104) lors du passage d'une position non étirée à une position étirée du soufflet.

4. Dispositif selon la revendication 3, dans lequel l'extrémité supérieure (110) du soufflet (102), dans la position étirée du soufflet, est ou peut être fixée de manière amovible à un plafond (134) de la cabine de conducteur (132).

5. Dispositif selon l'une quelconque des revendications 1 à 4, dans lequel une extrémité supérieure (110) du soufflet (102) opposée à l'ouverture inférieure (108) est fixée à un plafond (134) de la cabine de conducteur (132), et dans lequel l'ouverture inférieure (108) du soufflet (102) peut être déplacée le long de la direction verticale (104) lors du passage d'une position non étirée à une position étirée du soufflet.

6. Dispositif selon la revendication 5, dans lequel l'ouverture inférieure (108) du soufflet (102) peut être fixée de manière amovible au bord (112) du bac (106) dans la position étirée du soufflet.

7. Dispositif selon l'une quelconque des revendications 1 à 6, dans lequel le soufflet (102) comprend une fermeture à glissière (114) s'étendant dans la direction verticale (104).

8. Dispositif selon l'une quelconque des revendications 1 à 7, dans lequel le bac (106) comprend un écoulement d'eau (118) qui est accessible depuis l'extérieur du véhicule utilitaire (130) par le biais d'un clapet extérieur (136).

9. Dispositif selon l'une quelconque des revendications 1 à 8, comprenant en outre un réservoir (122) qui peut être rempli avec de l'eau fraîche par le biais d'une conduite d'alimentation (124) au moyen d'une pompe à commande électrique (126).

10. Dispositif selon la revendication 9, dans lequel un raccord d'eau fraîche (146) est accessible depuis l'extérieur du véhicule utilitaire (130) du côté d'entrée de la pompe (126) par le biais d'un clapet extérieur (136).

11. Dispositif selon la revendication 9 ou 10, dans lequel l'eau fraîche peut être chauffée dans le réservoir (122) et/ou lors du passage à travers la conduite d'alimentation (124) ou la pompe (126).

12. Dispositif selon l'une quelconque des revendications précédentes, le dispositif (100) pouvant être rangé avec le soufflet (102) dans sa position non étirée à l'intérieur de l'évidement (144) au niveau du plancher (142) de la cabine de conducteur (132).

13. Dispositif selon l'une quelconque des revendications précédentes, le dispositif (100) étant ou pouvant être installé derrière un siège de conducteur dans la cabine de conducteur (132).

14. Véhicule utilitaire (130) comprenant une cabine de conducteur (132), un dispositif de douche (100) selon l'une quelconque des revendications 1 à 13 étant installé dans la cabine de conducteur.
